Europäisches Patentamt

European Patent Office

Office européen des brevets

(11) Publication number: **0 027 740**
A1

# EUROPEAN PATENT APPLICATION

(21) Application number: 80303726.6

(22) Date of filing: 22.10.80

(51) Int. Cl.³: **A 24 D 3/02**
**A 24 D 3/10, D 04 H 1/54**

(30) Priority: 22.10.79 JP 136173/79
18.02.80 JP 18913/80

(43) Date of publication of application:
29.04.81 Bulletin 81/17

(84) Designated Contracting States:
CH DE FR GB LI

(71) Applicant: MITSUBISHI RAYON CO. LTD.
3-19, Kyobashi 2-chome Chuo-Ku
Tokyo 104(JP)

(71) Applicant: MITSUBISHI ACETATE CO., LTD.
3-19 Kyobashi 2-chome
Chuo-ku Tokyo104(JP)

(72) Inventor: Naoki, Mochida
No. 3, Kaigandori
Toyama-shi Toyama(JP)

(72) Inventor: Kazuhiko, Morifuji
No. 3, Kaigandori
Toyama-shi Toyama(JP)

(72) Inventor: Takashi, Sakai
No. 3, Kaigandori
Toyama-shi Toyama(JP)

(74) Representative: Roberts, Peter William et al,
Marks & Clerk Alpha Tower ATV Centre
Birmingham B1 1TT(GB)

(54) A method of manufacturing fibrous rod-like articles and apparatus for performing such a method.

(57) In the manufacture of a fibrous rod-like article for use, particularly as cigarette filters, a tow 2 of cellulose ester fibres is drawn from a bale 1, formed into the required shape and then impregnated with a carboxylic acid ester of a polyol. The impregnated tow 2 is then passed through a microwave irradiating device 10 and simultaneously with, or prior to, passage through the device (10) water is supplied to the tow. The water enhances the absorption of microwave energy by the tow, causing the carboxylic acid ester of the polyol rapidly to disperse and permeate the acetate fibre and hence rapidly complete the stabilization and solidification of the fibrous rod.

EP 0 027 740 A1

Croydon Printing Company Ltd.

./...

FIG. 1

The present invention relates to a method of manufacturing fibrous rod-like articles, such as for cigarette filters, which have a well-stabilised shape, and apparatus for performing the method.

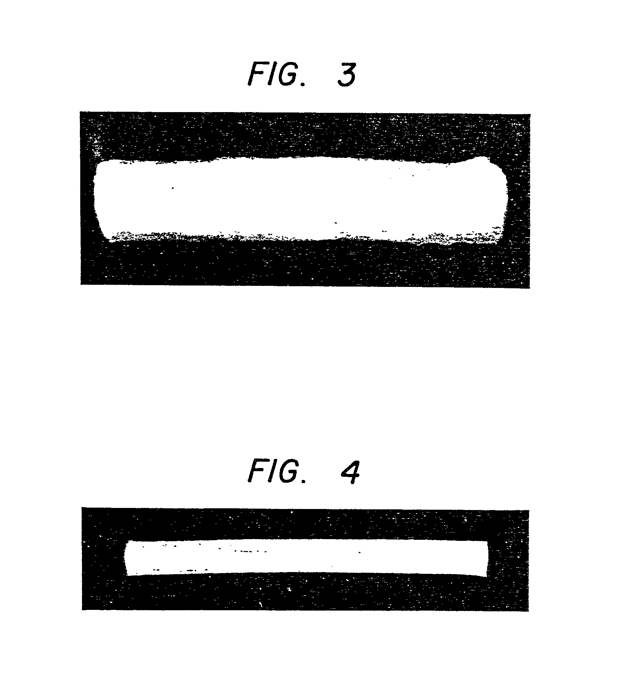

Heretofore, various methods have been proposed for manufacturing fibrous rods for use in cigarettes or other filters. For example, a method of forming fibrous rods of plasticizer-impregnated acetate fiber is disclosed in U.S. Patent No. 3,413,689, in which a plasticizer-impregnated tow is formed into a fibrous rod of a predetermined shape and the periphery of the tow is wrapped with a wrapping paper and a continuous belt to form a filter rod. The stability in configuration of the resulting filter rod is dependent on setting of the plasticizer, but the time required for the plasticizer to set is typically several hours or more. Therefore, if the wrapping paper is removed from the rod-shaped fibers before the shape has stabilised, the rod-shaped fibers will expand radially as shown in Figure 3. Due to this fact, it is almost impossible to produce wrapperless fibrous filter rods using this known method.

A wrapperless fibrous filter rod is superior in its ability to remove harmful components in tobacco smoke such as tar although the reason for this improved ability is not known.

A method for producing wrapperless fibrous rods has been proposed in U.S. Patent Nos. 3,313,306; 3,111,702 and 3,095,343. In the method described in these Patents, a tow impregnated with a plasticizer is transported by a steam permeable continuous belt and is treated with pressurised steam which activates the plasticizer impregnating the tow and promotes adhesion between the fiber filaments in the tow, thereby stabilising the shape
of the resulting article. Using this method, it is possible
to produce wrapperless fibrous rods with a high production
efficiency. However, since a large amount of water remains
in the filter rods, a large amount of energy is needed to
remove the moisture. Also, the method employs pressurised
steam which is difficult to handle.

A          method for manufacturing wrapperless
fibrous rods using microwave energy has been proposed in
U.S. Patent No. 4,003,774 and U.K. Patent Application No.
2,030,400. In the fibrous rod manufacturing method proposed in U.S. Patent No. 4,003,774, an acetate fiber tow
to which no plasticizer has been applied is formed into a
predetermined shape and is subjected to microwave radiation.
Microwave radiation is absorbed by the acetate fiber so
that the fiber is heated and plasticized thereby to enhance
the adhesion between neighboring filaments. Although, it
is possible to produce wrapperless fibers using this method,
since acetate fibers do not have a distinct melting point
and the range of thermal plasticization is very narrow
above which melting immediately occurs, the method is
difficult to control. If acetate fibers impregnated with
a plasticizer in the form /of a carboxylic acid ester of a
polyol are used with this method, the acetate fibers, upon
absorbing microwave energy, are nearly instantaneously
heated to a temperature of 200°C or more. In this case,
there is marked plasticization of the carboxylic acid
ester of the polyol and for this reason, melting of the
acetate fibers is much more prevalent than adhesion between
the acetate fibers. It is, therefore, impossible
effectively to produce filter rods having good shape
stability and filtration  characteristics. Moreover, the
plasticizer often evaporates from the acetate tow upon the
application of microwave energy and the evaporated
plasticizer can cause various difficulties. Therefore, using this method, it is very difficult to produce fibrous rods containing a carboxylic acid ester of a polyol.

The above noted defects inherent in the method proposed in U.S. Patent No. 4,003,774 may be overcome using the method disclosed in U.K. Patent Application No. 2,030,440, which employs a material which is soluble in the acetate fiber and which has a higher microwave absorption ratio than that of the acetate fiber and is essentially fully recoverable. That is, a second material is used which is not a solvent and not a plasticizer for the acetate fiber. The second material, which is added to absorb microwave energy, is heated to a temperature of 190 to 280°C to thus be converted from the liquid state to the vapour state. When an acetate fiber tow impregnated with the second material is processed using microwave energy, the second material absorbs microwave energy and thereby generates heat so as to melt the acetate fiber and cause adjacent filaments to adhere to one another. The vaporised second material is collected and removed. Thus, with this method, the defects inherent in the method of U.S. Patent No. 4,030,440 are overcome. However, it is impossible to use this method with filter material impregnated with a carboxylic acid ester of a polyol. Namely, since a carboxylic acid ester of a polyol is a strong plasticizer for acetate fibers and has low microwave absorption characteristics, if an acetate fiber impregnated with a carboxylic acid ester of a polyol is processed using this method and formed into a fibrous rod, the various disadvantages previously described with respect to U.S. Patent No. 4,030,440 are present. Furthermore, the carboxylic acid ester of the polyol tends to carry over with the vapour of the second material, thereby leading to problems if the second material is to be reused.

An object of the present invention is to overcome or alleviate the above-mentioned problems experienced in the prior art.

Accordingly, the invention resides in a method of producing a fibrous rod-like article comprising the steps of:

a) forming into /fibrous rod cellulose ester fibers impregnated with at least one carboxylic acid ester of a polyol;

b) uniformly impregnating said fibrous rod with water; and

c) irradiating the fibrous rod with microwave energy.

According to the present invention, although the cellulose ester fiber is impregnated with a carboxylic acid ester of a polyol, the configuration stability of the fiber is extremely high. The invention is therefore readily applicable to the manufacture of wrapperless fibrous filter rods for cigarette filters.

In the method of the present invention, water is used as a microwave absorbing material, and is heated to approximately 100°C which is sufficient to reduce the energy needed for producing the fibrous rod.

The boiling point of water is relatively low, 100°C, while the boiling point of a carboxylic acid ester of a polyol is relatively high, 250 to 260°C. In the method of the invention, fibrous rod production is carried out at a temperature at which the water is heated due to the microwave absorption, that is, at approximately 100°C, and hence the temperature to which the fiber is heated is low, approximately 100°C, and the cooling thereof is readily carried out. Thus deformation of the rod due to heat is not a problem and rods having a uniform configuration are rapidly produced.

In accordance with the present invention, a carboxylic acid ester of a polyol impregnated in the cellulose ester fiber is activated by microwave energy absorbed by water. Therefore, the carboxylic acid ester is rapidly dispersed causing it to permeate the fiber and thereby rapidly complete the stabilisation or solidification of the fibrous rod.

In the accompanying drawings,

Fig. 1 is a schematic view showing apparatus according to one example of the present invention;

Fig. 2 is an enlarged view of the microwave energy applying means of the apparatus shown in Fig. 1;

Fig. 3 is a photograph of a filter rod produced using a prior art technique and from which a wrapping paper has been removed; and

Fig. 4 is a photograph of a filter rod without a wrapping paper produced by the present invention.

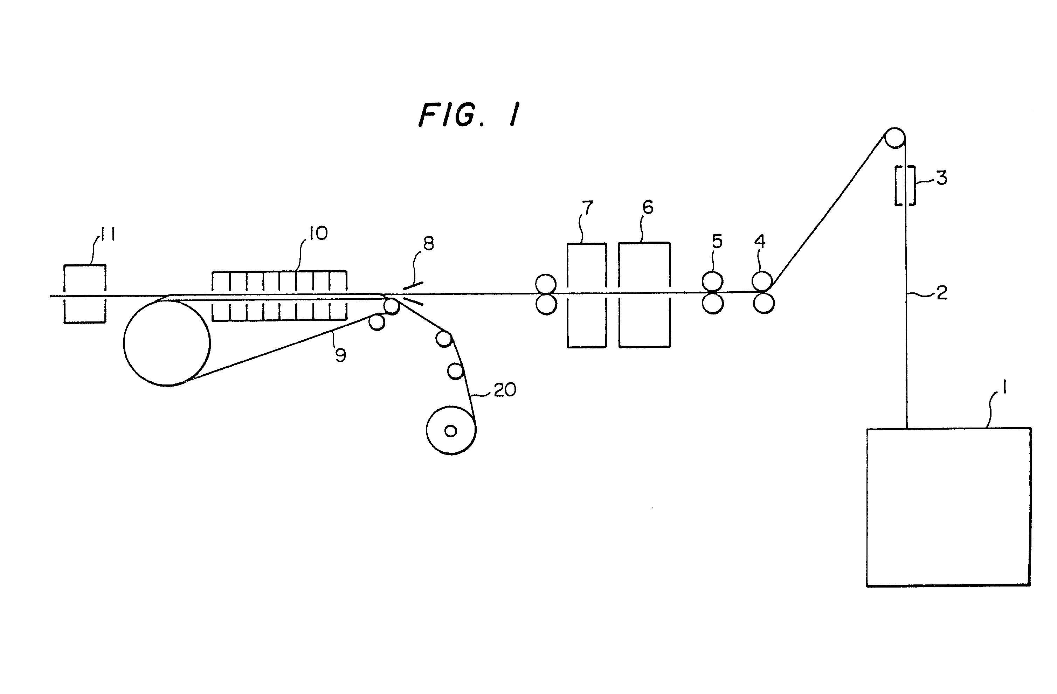

The apparatus of said one example of the present invention will now be described with reference to Fig. 1, in which the reference numeral 1 designates a bale of cellulose ester fibers and numeral 2 designates a tow drawn from the bale 1. Reference numeral 3 denotes a preliminary tow opening device for producing a filter rod having a uniform filtration efficiency from the tow 2. Reference numerals 4 and 5 denote nip roller type opening devices. Reference numeral 6 denotes a device for impregnating the opened tow 2 with a carboxylic acid ester of a polyol. Reference numeral 7 denotes a device for feeding water to the opened tow 2. The tow 2 impregnated with/carboxylic acid ester of/polyol is converged by a guide 8 (which may be dispensed with if desired) and the periphery of the tow 2 is then wrapped with a continuous endless belt 9 made

a
of/material through which microwave energy can easily pass.
The tow is then passed through a microwave irradiating
device 10, at which time it is necessary that water is
present in the filter rod.   As a result of irradiation
by microwave energy the filter rod is rapidly cured by the water and the polyol carboxylic acid ester to provide
a filter rod having a stabilised shape.   The final filter
rod is cut to a predetermined length by a cutter 11.

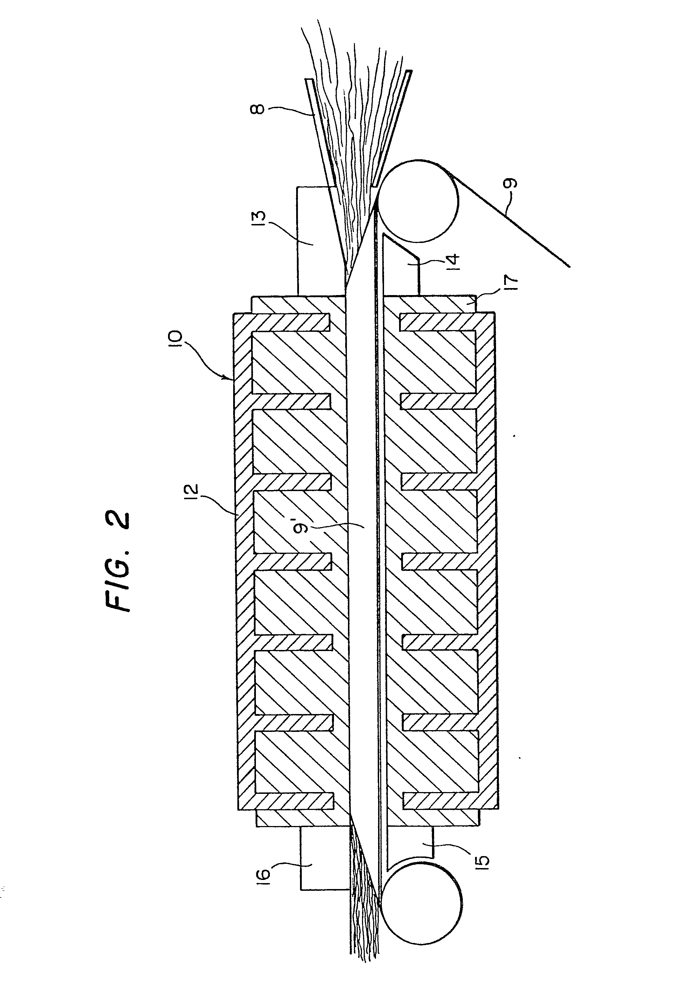

Referring to Fig. 2, the microwave irradiating device
10 includes a tubular microwave generator 12, a tubular
forming guide 17 which the microwave energy can penetrate,
guides 13, 14 for forming the fibrous tow into a fibrous
rod and delivering the fibrous rod encased by the endless
belt 9 to the guide 17, and further guides 15, 16 for
the filter rod leaving the guide 17.   It will be seen that
the rod is only encased by the endless belt 9 during
passage through the guide 17 so that the finished product
is a wrapperless filter rod.

It is necessary that the fibrous rod passing through
the microwave generator portion 12 of the device 10 contains
water uniformly.   As in the example shown, the water
may be introduced into the fibrous tow before the
fibrous tow is formed into the fibrous rod.   Otherwise,
it is possible to provide at an inlet or intermediate
position of the device 10, means for feeding vaporized
moisture to the fibrous rod.   In this case, steam may be
used as the vaporized moisture.   It is preferable that
the belt through which the microwave energy is transmitted
be made of material through which vaporized moisture is also
readily transmitted.   For example, the belt can be made
of a fabric.

In the method of the invention, the cellulose
containing fibrous material can be a regenerated acetylated
cellulose and preferably comprises cellulose diacetate.

Any fibre shape, either a long or short fibre, may be used.

The carboxylic acid ester of a polyol material used in a method of the invention is preferably a diacetate, dipropionate, dibutytate or triacetate of a polyol selected from glycerols, ethylene glycol, diethylene glycol, triethylene glycol, tetraethylene glycol and polyethylene glycols having 200 to 600 ethylene glycol units. Of these compounds, triethylene glycol diacetate and glycerol triacetate are preferred. The weight percentage of the carboxylic acid ester of a polyol is preferably 2 to 15%, more preferably 4 to 8%, with respect to the cellulose ester fibre. If the weight percentage of the carboxylic acid ester of a polyol is not greater than 2%, the moulding characteristics during the manufacture of the fibrous rod from the cellulose ester fibrous material are reduced, whereas if said weight percentage is greater than 15%, the fibrous tow is soft and poor in shape stability. Such a fibrous rod is undesirable due to the poor smoke taste thereof.

The water used in the invention may be in the liquid or vapor state. The water is absorbed by the cellulose containing fibres and adheres to and is held between neighboring fibres. Preferably, the water is present in an amount between 1 and 100%, preferably, 4 to 40% of the fibre weight. If the amount of water used is not greater than 1% by weight of the fibre weight, the microwave absorption efficiency is significantly reduced and the rod forming characteristics deteriorate. If, on the other hand, an excessive amount of water is employed, a large amount of energy is needed to remove the moisture from the finished fibrous rod. For providing the cellulose ester fibres with water, many known methods can be used to adjust the moisture content of the fibres. For example, moisture can be sprayed onto the fibres, a water containing roller or rolling brush can be used, or a steam feeding passage can be provided at a mid-portion of the fibre rod forming apparatus.

The belt 9 is a tape shaped member through which microwave energy can readily pass. Materials which are suitable for the belt 9 are polyolefins such as polyethylene or polypropylene; polyfluoroethylene; polyesters; cotton and linen. A belt made of sheet material from which water is readily removed is preferred. For this reason, it is preferably that the belt be made of a water permeable tape with suitable micro-or macro-perfora -tions.

The microwave frequency is suitably made from 300 to 30,000 MHz or, preferably 915 ± 25 MHz, 2,450 ± 50 MHz, 5,800 ± 75 MHz or 22,125 ± 125 MHz.

Since the fibrous rods produced according to the method of the invention reach a stable configuration in a short period of time, the production efficiency is markedly superior to that of the prior art. Heat applied to the fibrous rod is generated utilizing microwave absorption in water which is achieved at a temperature of approximately $100^{\circ}$C. Therefore, the energy needed to form the fibre rod is small and the cooling energy needed is also small.

The configuration stabilization of the fibrous rod produced according to the present invention is high so that the amount of fibre used in the fibrous rod can be increased thereby to increase its filtration efficiency. It is preferable to use a 15,000 to 70,000 D tow of the cellulose ester fibre.

The cross section of the fibrous rod produced according to the present invention may be rectangular or star-shaped, as well as circular or oblong. A fibrous tow processed according to the invention may also be used as a liquid retainer or a blood separation device.

## Example 1

A crimped cellulose diacetate tow of 4 dpf (denier per filament) and 50,000 D (denier) in total was drawn from a bale and treated with a water spray. After glycerol triacetate was applied to the opened tow so that its weight percentage was 6% of the fibre weight, water was sprayed thereon so that the water percentage was 11 percent by weight. Thereafter the tow was converged by a guide and the periphery thereof was surrounded by a continuous endless belt made of a woven polytetrafluoroethylene fibre. The tow in this condition was then passed through a microwave irradiating device which supplied microwave radiation tothe tow at a frequency of 2,450 ± 50 MHz. The time taken for passage through the microwave irradiating device was approximately 1 sec.

A photograph of fibrous rod thus obtained is shown in Fig. 4. The configuration stabilization of the rod was acceptable and no deformities were observed. The water content of the rod was about 6% by weight. Glycerol triacetate was fully dispersed in the fibres and the rod had a suitable hardness.

A second fibrous rod was produced by the method disclosed in U.S. Patent No. 3,413,689. The/second fibrous rod from which the wrapping paper was removed is shown in Fig. 3 from which it may be seen that the configuration stability was poor and the rod had expanded radially. Also, the rod was not completely hard and was unsuitable for use as a cigarette filter.

Example 2

After crimped cellulose diacetate tows of 4 dpf and 50,000 D-total were opened, triethylene glycol diacetate and/or glycerol triacetate was sprayed thereon in the amounts specified in Table 1. After these tows were converged by the guide 8 shown in Fig. 1, the tows were surrounded by a continuous endless belt woven from a polyester fibre and were passed through the microwave irradiating device 10 at the rates indicated in Table 1. Vaporized water was supplied from an inlet portion of the device 10 in the amounts specified in Table 1 and the tows were subjected to microwave radiation at a frequency of $2,450 \pm 50$ MHz thereby to form wrapperless fibrous rods. The thus obtained fibrous rods had good configuration stability.

0027740

- 12 -

Table 1

| | | 1 | 2 | 3 | 4 |
|---|---|---|---|---|---|
| Triethylene glycol di-acetate (wt%) | | 8 | - | - | 4.4 |
| Glycerol triacetate(wt%) | | - | 7.8 | 10.3 | 6.2 |
| Water percentage contained in fiber rod (wt%) | | 11 | 10 | 10.1 | 13.0 |
| rod dimension (mm) | Maximum diameter | 7.8 | 7.8 | 7.8 | 7.8 |
| | Minimum diameter | 7.7 | 7.8 | 7.7 | 7.7 |
| Production speed of fibrous rod (m/min) | | 10 | 10 | 10 | 40 |

C L A I M S :

1.  A method of producing a fibrous rod-like article
comprising the steps of:
    a) forming into/fibrous rod  cellulose ester fibres
impregnated with at least one carboxylic acid
ester of a polyol;
    b) uniformly/impregnating the fibres with water; and then

    c) irradiating the fibrous rods with microwave energy.


2.  A method as claimed in Claim 1, wherein the amount of
the carboxylic acid ester of a polyol contained in the
cellulose ester fibres is 4 to 8% by weight of the fibres.


3.  A method as claimed in Claim 1 or Claim 2, wherein the
carboxylic acid ester of a polyol is selected from
triethylene glycol diacetate and glycerol triacetate.


4.  A method as claimed in any preceding Claim, wherein
the amount of water contained by the fibres is 1 to 100% of
the fibre weight.


5.  A method as claimed in Claim 4, wherein the amount of
water contained by the fibres is 4 to 40% of the fibre
weight.


6.  The method as claimed in any preceding Claim, wherein
the fibres are impregnated with water before formation of
said fibrous rods.


7.  The method as claimed in any one of Claims 1 to 5,
wherein said step of impregnating said fibres with water
comprises/supplying water in vapor form to said fibrous rods.

8.    A method as claimed in any preceding Claim, wherein said cellulose ester fibres comprise cellulose diacetate fibres.

9.    Apparatus for producing a fibrous rod-like article comprising:

a) a bale for supplying cellulose ester fibres;

b) means for drawing a tow of fibres from said bale;

c) means for opening said tow for shaping a filter rod having a uniform filtration efficiency;

d) means for impregnating said tow with a carboxylic acid ester of a polyol;

e) means for wrapping the periphery of said tow with a belt formed of a material through which microwave energy will pass;

f) means for applying microwave energy to the wrapped tow; and

g) means for supplying water to said fibres at least during application of the microwave energy.

10.    Apparatus as claimed in Claim 9, wherein said means for supplying water is disposed at said means for applying microwave energy.

11.    Apparatus as claimed in Claim 9, wherein said means for supplying water is disposed upstream of said means for applying microwave energy.

12.    Apparatus as claimed in any one of Claims 9 to 11, wherein said water supplying means comprises means for supplying vaporized water.

13.    Apparatus as claimed in any one of Claims 9 to 12, wherein said belt is composed of a fabric material.

FIG. 1

## FIG. 2

3/3

FIG. 3

FIG. 4

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| | FR - A - 2 260 372 (COURTAULDS LTD.)<br><br>* Page 2, line 3 - page 5, line 18; figure * <br><br>-- | 1,3-9, 11-13 |
| | FR - A - 2 312 912 (BAUMGARTNER PAPIERS S.A.)<br><br>* Page 1, line 27 - page 2, line 24 *<br><br>-- | 1,3,7, 8,9,10, 12,13 |
| | BE - A - 720 541 (EASTMAN KODAK COMPANY)<br><br>* Page 9, line 18 - page 11, line 13 *<br><br>-- | 2,3,8 |
| | US - A - 3 190 294 (DUNLAP)<br>* Column 3, lines 48-67 *<br><br>-- | 2,3,8 |
| A | FR - A - 2 316 886 (BAUMGARTNER PAPIERS S.A.)<br><br>* Page 2, line 28 - page 3, line 19 *<br><br>---- | |

### CLASSIFICATION OF THE APPLICATION (Int. Cl.³)

A 24 D 3/02
A 24 D 3/10
D 04 H 1/54

### TECHNICAL FIELDS SEARCHED (Int.Cl.³)

A 24 C
A 24 D
D 04 H
B 01 D

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| The present search report has been drawn up for all claims | | |
| Place of search<br>The Hague | Date of completion of the search<br>26-01-1981 | Examiner<br>RIEGEL |

EPO Form 1503.1  06.78